# EUROPEAN PATENT APPLICATION

(11) **EP 1 727 383 A1**
(43) Date of publication of application: **29.11.2006**
(21) Application number: 05253273.6
(22) Date of filing: 27.05.2005
(51) Int. Cl.: H04Q 7/38

(54) **Mobile communications**

(71) Applicant: BRITISH TELECOMMUNICATIONS public limited company, London EC1A 7AJ (GB)
(72) Inventor: Defoort, Steven Wim, Mechelen 8-2800 (BE)
(74) Representative: Lidbetter, Timothy Guy Edwin

(57) **Abstract**

A mobile communications service provider 18 stores a number of datasets relating to subscriptions for use in a network 13 other than the provider's own. When a mobile unit 10 identifies that it has "roamed" to a network 13 other than its home network 11 it sends a call 34 for to its own provider requesting one of the datasets, which it then uses as a temporary subscription on the visited network 13. Thus the roaming handset 10 can operate as a local subscriber, avoiding the cost and complexity of roaming.

## Description

This invention relates to mobile communications, and in particular to extending the geographical coverage offered to users subscribing to a first network, such that they may use their terminals in a second network.

Arrangements exist between network operators to allow a subscriber to a first network to make and receive calls using the infrastructure of a second network. This is known as "roaming". Certain call-control functions, in particular verification that the user is authorised to make outgoing calls, are performed by a Home Location Register (HLR) associated with the user's home network. This adds to the signalling overhead and delay in setting up a call. In particular, the signalling overhead required to make a local call from a "roaming" terminal is considerably greater than would be required to make a similar call when operating on the home network. This can be inconvenient, for example when several people are travelling together their mobile terminals may all have roamed to the same local network, but call connection still needs to be made through the home location registers back in their home country. Consequently, mobile phone calls made or received when roaming are very costly and not in line with costs of retail subscriptions in the country in which a mobile phone is roaming.

Another difficulty is that the user and service provider have little control over selection of the network to which the terminal is to roam. In general, when a mobile terminal is switched on and fails to detect its own home network, it connects to a local network with which the service provider has a roaming agreement, usually the one having the strongest signal. The user will remain with that network until it loses contact, either because the handset is switched off or because it has gone out of range. However, it will be apparent that the network selected will not necessarily be the same throughout the user's foreign visit. The user may be given the choice to over-ride this selection, but it is inconvenient to do this manually and requires some knowledge of the available networks if an informed selection is to be made.

It would be possible to provide a terminal, or more usually a subscriber identity module (SIM) for a terminal, that carries a plurality of subscriber details, in order to provide a local subscription in each of several territories. However, this has the drawback of providing to each subscriber a whole raft of telephone numbers, one for each country, many of which will see little, if any, use. It is also inflexible, as the subscriptions have to be programmed into the SIM in advance. There are usually set-up costs and standing charges for mobile telephone subscriptions, so it would be inconvenient and expensive to program them into a SIM just in case they might be needed.

The present invention provides a mobile communications terminal having means for establishing initial communication with a first mobile network, means for accessing a server, means for obtaining from the server, over the established initial connection, data relating to a subscription optimised for the current location of the terminal, and means for loading the new subscription details such that the terminal becomes a mobile station user for the selected mobile network. The new subscription details (IMSI, MSISDN, etc) sent to the terminal are preferably protected by encryption of some form. It should be noted that the subscription that is obtained may be for a network other than the one with which communication has been established, if for example the server determines that another network is more suitable.

The invention also provides a subscription provision server for provision of mobile communications service comprising means for receiving access requests from a mobile terminal, means to select subscription data relating to a mobile communications network from a store of such data, and means to transmit to the mobile terminal the selected subscription data. The network to which the subscription relates may pass any call charge information on to the operator of the server, who in turn can bill the user. This allows a service provider, whether or not it operates its own network, to select which operators its customers are to be connected to in any given territory.

The invention also extends to a method for establishing an initial connection between a mobile terminal and a first network and accessing a server over that connection, wherein the server selects a network on which the mobile terminal is to operate, the server selects subscription details relating to the selected network from a store of such details, and transmits to the mobile terminal the selected subscription details, and the mobile terminal loads the new subscription details such that the terminal becomes a home Mobile Station user for the selected mobile network.

This invention allows the user to make calls without roaming in the conventional sense. Existing number-translation on calling line identity (CLI) facilities may be used to allow a number other than that of the subscriber line to be displayed to a party called by the user, and for this purpose outgoing calls may be routed to an in-country Point of Presence (switch) for addition of the end-user CLI.

Call forwarding can be activated in the home network so that incoming calls, initially directed to the home mobile network, dial a number at the POP. The POP then translates and forwards the call to the directory number relating to the temporary subscription currently used by the end-user.

An embodiment of the invention will now be described by way of example, with reference to the drawings, in which:
Figure 1 is a schematic general arrangement diagram illustrating the associations between the various elements that co-operate to perform the invention
Figure 2 illustrates a conventional roaming process
Figure 3 illustrates a process according to the invention
Figure 4 is a schematic representation of part of a mobile terminal configured according to the invention
Figure 5 is a schematic representation of a server according to the invention

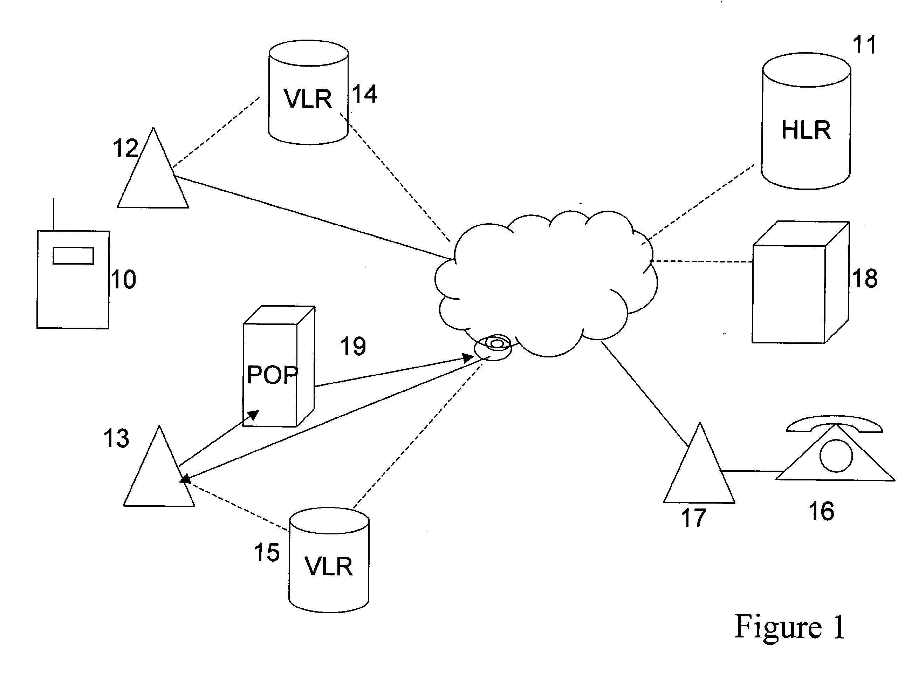

Figure 1 illustrates schematically a simplified arrangement of several cooperating networks, and the relevant components of those networks. The user's mobile handset 10 has the capability to establish radio communication with fixed base stations 12, 13 in order to convey voice calls, text messages etc and a signalling overhead.

The user's "home" network, to which the user subscribes, is represented by that network's Home Location Register (HLR) 11. This stores subscription details, including permanent number translation details such as the concordance between the user's SIM (subscriber identity model) and MSISDN (directory number) and whether the user is permitted to roam to other networks. It also stores details relating to the identity of the network with which the user's handset is currently working.

Two mobile networks are represented in Figure 1 by respective base stations 12, 13, and Visitor Location Registers (VLRs) 14, 15. Each VLR 14,15 stores details of any mobile subscriber currently associated with its respective network, downloaded from the HLR 11 of the user's home network when the user handset 10 first makes contact with the visited network. The VLR 14, 15 also identifies itself to the HLR 11 so that the HLR can store details of the visited network.

As will be described, this arrangement allows calls to be made between the handset 10 and any other telephone terminal 16, shown illustratively as connected to a fourth network 17.

The present invention makes use of a server 18 associated with the Home Location Register 11. Certain auxiliary features also require a POP server 19 associated with the visited network 13,15.

A mobile communications terminal is a powerful radio measurement device. It is the prime source for the mobile network to give information on the radio environment at its location. Therefore, it is also the Mobile Station that takes the initiative to start roaming on another network and will try, upon loss of radio signal with its home network, to "camp" on the radio beacon of one of the GSM networks that it finds around it. Until the Mobile Station 10 successfully camps on the network 12, 14 that it has detected, it has no communication possibility. As soon as the Mobile station successfully logs on to the visited network, it can communicate again.

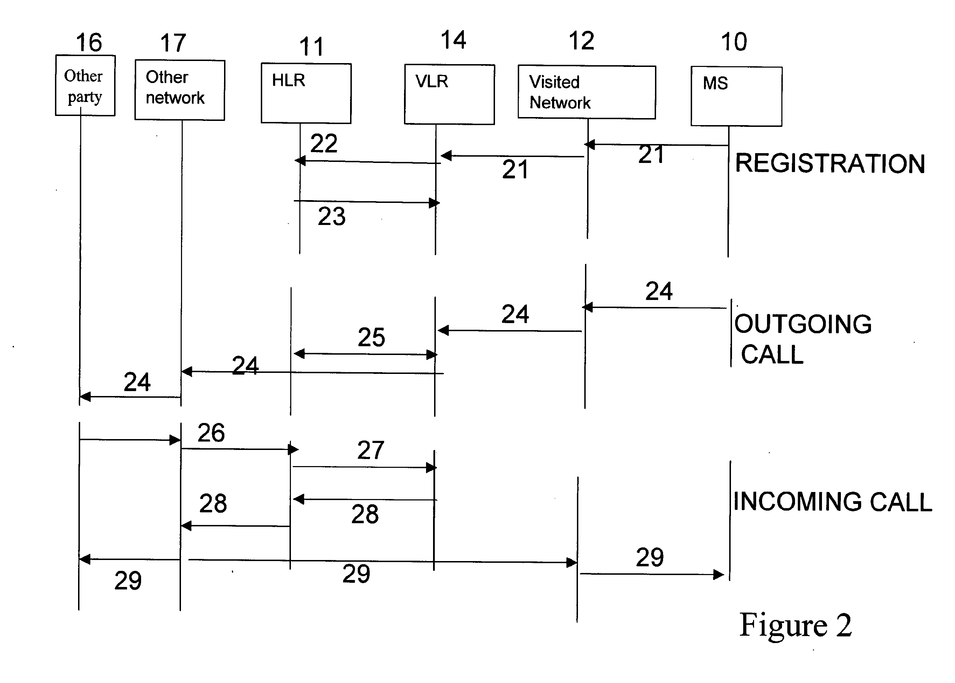

Figure 2 illustrates the conventional roaming process. Steps 21-23 illustrate initial registration, Steps 24-27 illustrate how outgoing calls from the mobile unit 10 are handled, and steps 28,29 illustrate how incoming calls to the mobile unit 10 are handled.

When a mobile station 10 loses connection with its home network, it listens out for radio transmissions on all GSM frequencies and captures one or more beacon frequencies from nearby base stations 12, 13 (see Figure 1). The mobile unit 10 will normally select the strongest of these signals 12 and transmits a request 21 to the network to register it as a visitor (roamer) on that network's VLR 14. The Mobile Station 10 thus logs-on to the Visited Network (12) using the identity (IMSI) it was allocated by its home network 11.

The VLR 14 now transmits a request 22 incorporating the user's IMSI to the HLR 11 of the home network to check the user's credentials (e.g. to determine if the subscriber is allowed to "roam" to the visited network). If appropriate, the HLR 11 next transmits a confirmation 23 authorising the visited network to provide service to the handset 10.

The HLR 11 in the home network also stores the identity of the VLR 14 against the record for the IMSI of the handset 10. This allows an incoming call from a caller 16 to retrieve from the home network (to which any incoming call to the user's directory number will initially be routed) the identity of the network 12 through which the user 10 may be called, and to be routed accordingly.

Outgoing calls can be handled in a straightforward manner once the mobile unit 10 is registered with a network 12,14. The visited network receives the outgoing call request 24 from the mobile station 10 and allows the call to take place. If necessary, the VLR 14 may exchange information 25 with the HLR 11 in the user's home network to check whether that individual call 24 is permitted.

An incoming call operates as follows. A call request 26 is made from a terminal 16 _by dialling the MSISDN (Directory Number). The network 17 to which the originating terminal 16 is currently operating may be the home network 11 of the destination terminal 10, or the network 12 to which it has roamed, but in general will be neither of these, and in any case the operation is essentially the same in each case. The network 17 forwards the call request 26 on to the network 11 associated with the target user's MSISDN. Upon reception of the call by the home network, it consults its HLR (Home Location Register) 11 to identify the network with which the subscriber 10 is currently registered. In the present example, the VLR 14 so identified is that of another network 12.

At this point, the HLR 11 of the home network transmits a request 27 to the VLR 14 of the visited network 12 to receive a temporary telephone number. This is known as the MSRN ― Mobile Station Routing Number. Each MSRN is similar to a public MSISDN, but it is in a separate range that can only be dialled between networks, and not by individual end-users.

The VLR 14 in the visited network initiates some further steps to pinpoint the exact location of the Mobile station 10 and attributes to the specific incoming communication a temporary MSRN. That MSRN 28 is then communicated to the HLR 11 so that in the home network the call 29 can be routed to the network 12 in which the mobile unit 10 is currently roaming.

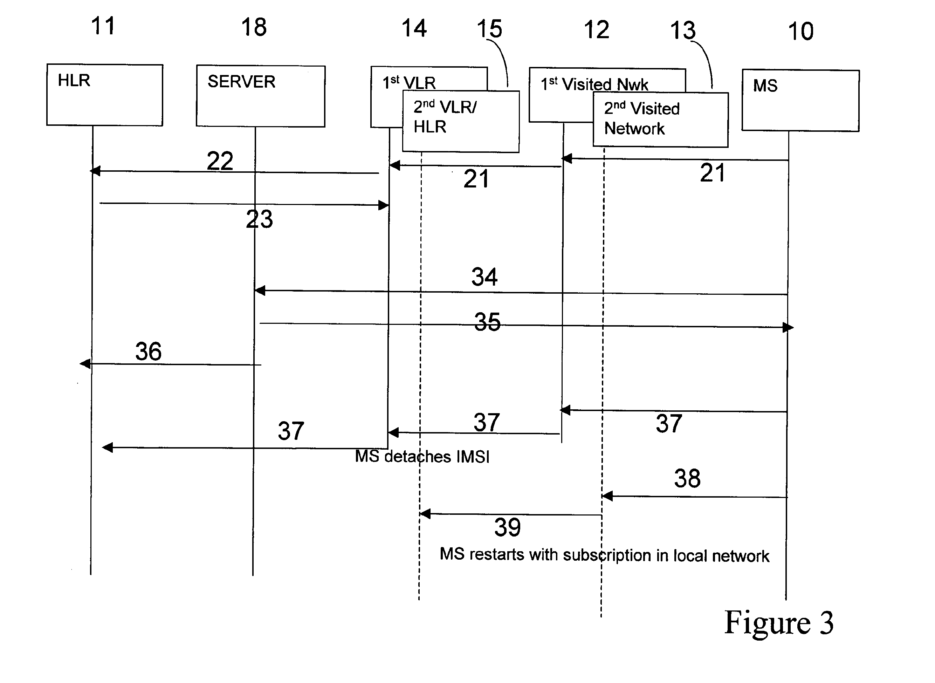

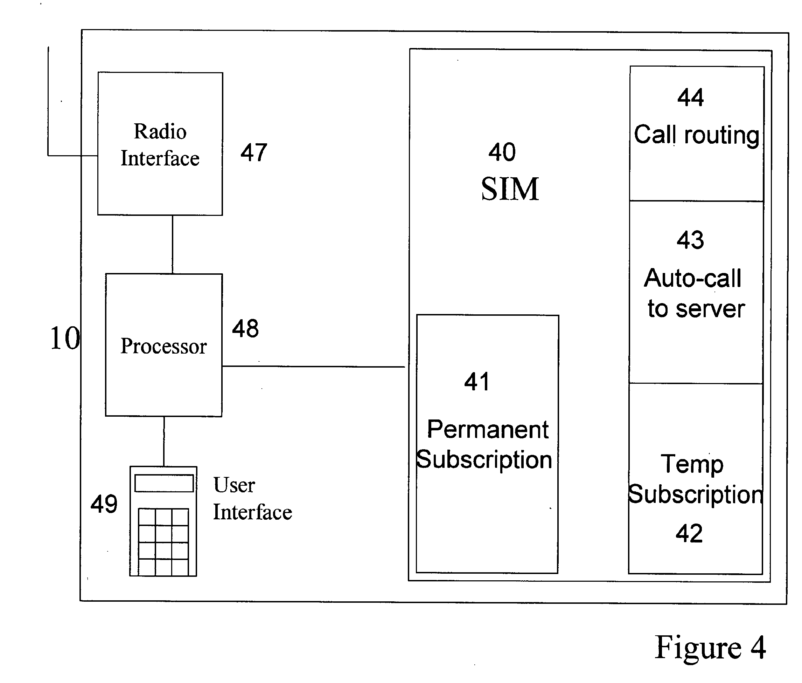

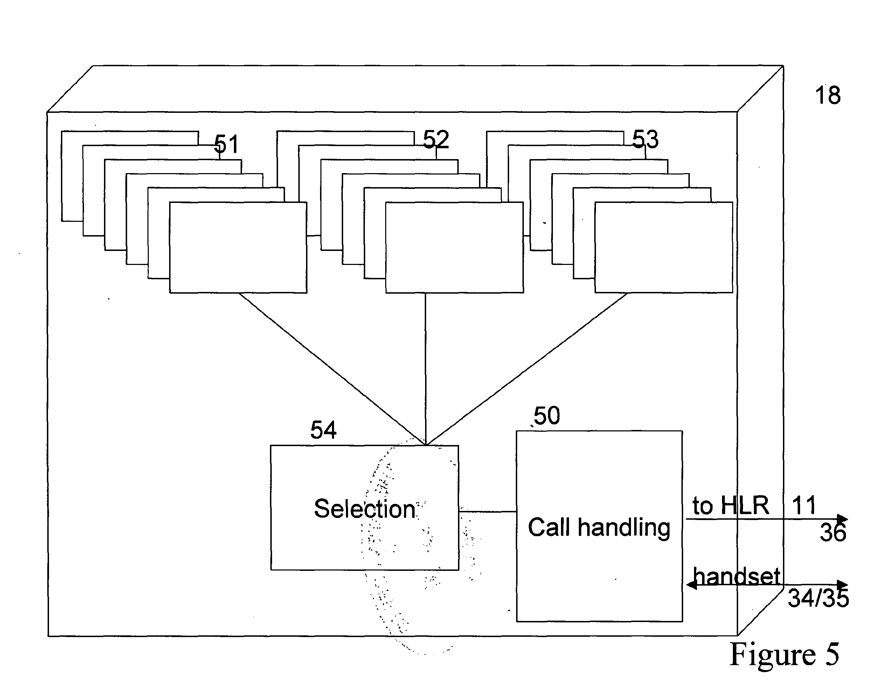

Figure 3 illustrates schematically a process according to the invention. Figures 4 and 5 illustrate schematically the components, respectively, of a mobile telephone handset and a server, applicable to this invention.

Figure 4 is a schematic diagram of a mobile terminal 10 incorporating a Subscriber Identity Module (SIM) 40. In this embodiment the relevant components are stored on the Subscriber Identity Module (SIM), 40. The data relevant to the user's permanent subscription are held in a store 41.

As is conventional, the terminal 10 comprises a user interface 49 by which the user may enter instructions and receive information, and a radio interface 47 by which the terminal interacts with the network. The necessary coding and decoding, handover, and other processes are performed by a processor 48, which can retrieve data specific to the user, such as the user's network identity, and pre-set programmes, from a SIM (subscriber identity module) 40.

According to the present invention the handset 10, and more specifically the SIM 40 incorporated therein, also includes a component 43 programmed such that on recognising that the handset has registered with a visited network 12, 14, it signals a request 34 to a server 18 associated with its home network 11 to obtain a local subscription.

The home network 11 may maintain a single server 18 with which a terminal 10 may communicate from any remote network 12, 14, or it may maintain a number of servers each associated with a given territory. In the latter case, the mobile station 10 would store contact information 43 for a set of servers, such that it can contact the server 18 appropriate to the territory in which it is roaming.

In the process according to the invention illustrated in Figure 3, the Mobile station 10 establishes contact with a first visited network 12, 14 as in conventional roaming (steps 21-23). Thus, after the Mobile Station 10 is successfully established in roaming mode, it initiates a data call 34 to the server 18, giving it the information it needs to initiate the transfer. If a single server 18 covers a number of different territories, this information would include the identity of the network 12,14 on which is it currently roaming. Other than the fact that it is set up automatically, this call 34 is set up in the same manner as a conventional outgoing call 24 as already described.

The Server 18 therefore receives from the Mobile station 10 a data message 34, with the identification of the terminal 10 and the information as to its general location. This may take any suitable form, such as in SMS format or an in-band data communication. In general, networks tend to have similar territorial coverage areas, defined by national boundaries. It is therefore a simple matter to deduce, from the identity of the network to which the handset is attached, which other networks are available.

The Server 18, as illustrated schematically in Figure 5, has available to it a set of subscriptions 51, 52, 53 for each territory in which the service is offered. It also has call handling means 50 for receiving requests from handsets and returning subscription details, and processing means 54. When the call-handling means 50 receives a request for service from a mobile device 10 in a specified territory, the processor 54 selects a subscription from the store 51 appropriate to the location of the user 10, allocates it to the requesting Mobile Station 10, and generates a message 35 containing all the identification details necessary for the handset 10 to reprogram its SIM card to reconfigure it as a local subscriber 51 on the selected network 13, 15. The selected subscription 51 then ceases to be available until the server 18 identifies that the mobile unit 10 has moved back to its home network or to a third network. The data for the subscription 51 includes a directory number (V-CLI) and a SIM identification code (V-IMSI). The server 18 also transmits a data message 36 to the user's home HLR 11 containing the same data.

The Mobile station 10 now loads all this information in its SIM, stored in a store 43. This data is used in preference to the original subscription data 41. (The original data may be retained on the SIM, or it may be stored in the home network 11 and downloaded again when the user returns to his home network 11).

The Mobile station 10 next reboots. This initiates a cascade 37 of messages (IMSI-detach) that cause it to disappear from the first Visited Network 12, 14, by removing from the VLR 14, and subsequently from the HLR 11, the information that the Mobile station 10 was roaming.

The instructions 35 from the server 18 also include a routine 44 to cause the mobile station 10 to send all outgoing calls (fixed or mobile) to a point-of-presence (POP) server 19 associated with the visited network 13.

After rebooting 38, the mobile station now behaves as if it has a local subscription to the visited network 13. The visited network 13 registers location information in its own HLR and VLR 15 (step 39). The handset 10 now appears to the host network 13 as a normal subscriber of that network 13.

The call-routing programme 44 configures the mobile station 10 to route outgoing call requests to the POP server 19. These call requests include the user's permanent (original) directory number (CLI). On receiving such a request, the POP server 19 generates a call request to the directory number 16 dialled on the handset. The user is then put in contact with the final destination. However, whilst forwarding the call, the POP server 19 will overwrite the CLI of the caller 10 with the directory number associated with its original subscription, thereby allowing a called party 16 (Figure 1) to identify the caller by his usual directory number.

The information 36 sent to the home HLR 11 links the original CLI of the Mobile Station with the temporary CLI currently allocated to it. Any incoming call to the user's usual directory number can then be handled by diversion to the number provided by the Server 18. The call is thus forwarded by the original network 11 to the number given to it by the server, which would be in most cases the visited-MSISDN number.

Alternatively, the number supplied to the HLR 11 could be a number in the POP server 19, which it then translates to the visited MSISDN number. The server 19 retrieves details of the temporary subscription used by the handset 10, and forwards the call to the appropriate network 13, 15. Since the subscription is one of the destination network's own subscriptions, the call will be completed as if the user 10 is not roaming.

If the Mobile Station 10 roams further, for example to another country, the Mobile station can repeat the above process. The home server 18 may obtain either a new temporary subscription, or if it moves back to its home network, it may regain its original subscription, in either case cancelling the association between the handset identity and the temporary subscription, to allow it to be used again.

## Claims

1. A mobile communications terminal having means for establishing initial communication with a first mobile network, means for accessing a server, means for obtaining from the server, over the established initial connection, data relating to a subscription optimised for the current location of the terminal, and means for loading the new subscription details such that the terminal becomes a Mobile Station user for the selected mobile network.

2. A mobile communications terminal according to claim 1, having means for accessing any one of a plurality of servers, means for determining its location, and selecting a server for accession on the basis of its location.

3. A subscription provision server for provision of mobile communications service comprising means for receiving access requests from a mobile terminal, means to select subscription data relating to a mobile communications network from a store of such data, and means to transmit to the mobile terminal the selected subscription data.

4. A subscription provision server according to claim 3, comprising means for determining the location of the mobile terminal, means for selecting the network on which the mobile terminal is to operate, the means, for selecting subscription data being arranged to select data for a subscription to the selected network.

5. A server according to claim 3 or 4, further comprising means for encrypting the subscription details sent to the terminal.

6. A method for establishing an initial connection between a mobile terminal and a first network and accessing a server over that connection, wherein the server selects a network on which the mobile terminal is to operate, the server selects subscription details relating to the selected network from a store of such details, and transmits to the mobile terminal the selected subscription details, and the mobile terminal loads the new subscription details such that the terminal becomes a home Mobile Station user for the selected mobile network.

7. A method according to claim 6, wherein the subscription details sent to the terminal are encrypted.

8. A method according to claim 6 or 7, wherein the server determines the location of the mobile terminal and selects a network accordingly

9. A method according to claim 6 or 7, wherein the mobile terminal determines its location, and selects a server for accession according to that location.
